# EUROPEAN PATENT SPECIFICATION

(11) **EP 3 567 963 B1**
(45) Date of publication and mention of the grant of the patent: **01.09.2021**
(21) Application number: 18882301.7
(22) Date of filing: 15.03.2018
(51) Int. Cl.: H04W 74/08

(54) **DATA TRANSMISSION METHOD AND DEVICE**
DATENÜBERTRAGUNGSVERFAHREN UND VORRICHTUNG
PROCÉDÉ ET DISPOSITIF DE TRANSMISSION DE DONNÉES

(43) Date of publication of application: 13.11.2019
(73) Proprietor: GUANGDONG OPPO MOBILE TELECOMMUNICATIONS CORP., LTD., Wusha, Chang'an Dongguan, Guangdong 523860 (CN)
(72) Inventor: TANG, Hai, Guangdong 523860 (CN)
(74) Representative: Manitz Finsterwald Patent- und Rechtsanwaltspartnerschaft mbB
(86) International application number: PCT/CN2018/079195
(87) International publication number: WO 2019/174011

(56) References cited:
- CN-A- 106 686 736
- CN-A- 107 432 040
- CN-A- 107 734 713
- ERICSSON: "Sidelink Carrier Selection Criteria for TX", 3GPP DRAFT; R2-1803528 - SIDELINK CARRIER SELECTION CRITERIA FOR TX, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FR , vol. RAN WG2, no. Athens, Greece; 20180226 - 20180302 16 February 2018 (2018-02-16), XP051400566, Retrieved from the Internet: URL:http://www.3gpp.org/ftp/tsg%5Fran/WG2% 5FRL2/TSGR2%5F101/Docs/ [retrieved on 2018-02-16]
- PANASONIC: "Discussion on channel busy ratio measurement in V2X", 3GPP DRAFT; R1-1609571, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Lisbon, Portugal; 20161010 - 20161014 9 October 2016 (2016-10-09), XP051149608, Retrieved from the Internet: URL:http://www.3gpp.org/ftp/Meetings_3GPP_ SYNC/RAN1/Docs/ [retrieved on 2016-10-09]
- OPPO: "Mode 4 Support in eV2X Carrier Aggregation", 3GPP TSG RAN WGI Meeting #92 R1-1802110, vol. RAN WG1, 2 March 2018 (2018-03-02), pages 1-3, XP051396842,

## Description

### TECHNICAL FIELD

The disclosure relates to the field of wireless communications technologies, and in particular, to a data transmission method and apparatus.

### BACKGROUND

The Internet of Vehicles system employs the Sidelink (SL) transmission technology based on Long Term Evolution (LTE)-Device to Device (D2D). Different from a mode in which communication data is received or sent by a base station in a conventional LTE system, a terminal to terminal direct communication mode is used in the Internet of Vehicles system. Therefore, the Internet of Vehicles system has higher spectral efficiency and a lower transmission delay.

In the 3rd Generation Partnership Project (3GPP) Rel-14, a Vehicle-to-Everything (V2X) technology is standardized, and the following two transmission modes are defined: mode 3 and mode 4. In the mode 3, a transmission resource of a terminal is allocated by a base station. In the mode 4, a terminal determines a transmission resource in a manner of sensing (sensing) and reservation (reservation).

In the Rel-15, the Evolved Vehicle-to-Everything (eV2X) technology is expanded to a multi-carrier scenario, that is, one User Equipment (UE) may simultaneously transmit signals on more than one carrier. This brings a problem about how to perform carrier selection.

3GPP contribution R2-1803528 discusses sidelink carrier selection criteria. One solution it discusses is not to transmit lower priority packets in case the channel busy ratio (CBR) on a carrier exceeds a threshold.

Related technologies are known from 3GPP contribution R1-1609571.

### SUMMARY

The present invention is defined in the independent claims, and the preferable features according to the present invention are defined in the independent claims.

To resolve the foregoing technical problem, embodiments of the disclosure provide a data transmission method and apparatus and a computer storage medium.

The present disclosure provides a data transmission method, according to claim 1, where the method includes, inter alia, that, when determining that a measured value of a channel busy ratio (CBR) of each carrier in a first carrier set is higher than a threshold, a terminal determines a target carrier from the first carrier set and transmits target data by using the target carrier, or the terminal determines not to transmit the target data on any carrier, where the first carrier set is a carrier set corresponding to a target service to which the target data belongs.

In an implementation, a data priority of the target data may be a target data priority, and the action of determining not to transmit the target data on any carrier may include determining not to transmit, on any carrier, data corresponding to the target service and/or the target data priority.

In an implementation, the actions of determining a target carrier from the first carrier set, and transmitting target data by using the target carrier may include that, the terminal selects from the first carrier set, a carrier, on which the measured value of the CBR is lowest, as the target carrier for transmitting the target data.

In an implementation, the action of determining, a target carrier from the first carrier set, and transmitting target data by using the target carrier may include that, the terminal selects any carrier from the first carrier set as the target carrier for transmitting the target data.

In an implementation, the actions of determining a target carrier from the first carrier set and transmitting target data by using the target carrier may include that, the terminal determines a manner of selecting the target carrier, determines the target carrier based on the manner of selecting the target carrier, and transmits the target data by using the target carrier. When the terminal determines a first selection manner, the terminal may select, from the first carrier set, a carrier, on which the measured value of the CBR is lowest as the target carrier for transmitting the target data. When the terminal determines a second selection manner, the terminal may select, from the first carrier set, any carrier as the target carrier for transmitting the target data.

In an implementation, the method may further include that, when the terminal determines a third selection manner, the terminal may determine not to transmit the target data on any carrier.

In an implementation, a data priority of the target data is a target data priority, and the action that the terminal determines not to transmit the target data on any carrier may include that, the terminal determines not to transmit, on any carrier, data corresponding to the target service and/or the target data priority.

In an implementation, the threshold may be configured for a system;
the threshold may be configured for a cell;
the threshold may be configured for the terminal;
the threshold may be configured for a carrier; or
the threshold may be configured for a resource pool on a carrier.

The first carrier set is carrier set mapped to the target data priority of the target data.

In an implementation, the method includes that, a network device sends first configuration information to a terminal, where the first configuration information includes that a threshold of a CBR of at least one carrier, which is a maximum CBR value, for the terminal to determine a target carrier from the at least one carrier and transmit target data by using the target carrier.

In an implementation, the threshold may be configured for a system;
the threshold may be configured for a cell;
the threshold may be configured for the terminal;
the threshold may be configured for a carrier; or
the threshold may be configured for a resource pool on a carrier.

An embodiment of the present disclosure which is outside the scope of the invention as claimed, provides a data transmission method, where the method includes that, when determining that there is no same carrier in a first carrier set and a second carrier set, a terminal determines a target carrier from the first carrier set and/or the second carrier set, and transmits target data by using the target carrier or determines not to transmit the target data on any carrier, where the first carrier set is a carrier set corresponding to a target service to which the target data belongs, and the second carrier set is a carrier set corresponding to a target data priority of the target data.

In an implementation, the action of determining not to transmit the target data on any carrier may include determining not to transmit, on any carrier, data corresponding to the target service and/or the target data priority.

In an implementation, the actions of determining a target carrier from the first carrier set and/or the second carrier set and transmitting target data by using the target carrier may include that, the terminal determines the target carrier from the first carrier set, and transmits the target data by using the target carrier.

In an implementation, the actions of determining a target carrier from the first carrier set and/or the second carrier set and transmitting target data by using the target carrier may include that, the terminal determines the target carrier from the second carrier set, and transmits the target data by using the target carrier.

In an implementation, the actions of determining a target carrier from the first carrier set and/or the second carrier set and transmitting target data by using the target carrier may include that, the terminal determines a manner of selecting the target carrier, determines the target carrier based on the manner of selecting the target carrier, and transmits the target data by using the target carrier. When the terminal determines a first selection manner, the terminal determines the target carrier from the first carrier set, and transmits the target data by using the target carrier. When the terminal determines a second selection manner, the terminal determines the target carrier from the second carrier set, and transmits the target data by using the target carrier.

In an implementation, the method may further include that, when the terminal determines a third selection manner, the terminal determines not to transmit the target data on any carrier.

In an implementation, the action that the terminal determines not to transmit the target data on any carrier may include that, the terminal determines not to transmit, on any carrier, data corresponding to the target service and/or the target data priority.

In an implementation, the first carrier set may be configured by a high layer; and the second carrier set may be configured by an access layer.

An embodiment of the present disclosure which is outside the scope of the invention as claimed, provides a data transmission method, where the method includes that, a network device sends second configuration information to a terminal, where the second configuration information indicates a second carrier set corresponding to a target data priority, where the second carrier set includes at least one first carrier or at least two first carriers, and the first carrier can be mapped to all data priorities.

In an implementation, the first carrier set may be configured by a high layer; and the second carrier set may be configured by an access layer.

An embodiment of the present disclosure provides a data transmission apparatus according to claim 9, where the apparatus includes a determining unit and a transmission unit. The determining unit is, inter alia, configured to: when determining that a measured value of a CBR of each carrier in a first carrier set is higher than a threshold, determine a target carrier from the first carrier set. The transmission unit is, inter alia, configured to: transmit target data by using the target carrier or skip transmitting the target data on any carrier. The first carrier set is a carrier set corresponding to a target service to which the target data belongs.

In an implementation, a data priority of the target data may be a target data priority, and the action of determining not to transmit the target data on any carrier includes determining not to transmit, on any carrier, data corresponding to the target service and/or the target data priority.

In an implementation, the determining unit may be configured to select, from the first carrier set, a carrier, on which the measured value of the CBR is lowest as the target carrier.

In an implementation, the determining unit may be configured to select any carrier from the first carrier set as the target carrier.

In an implementation, the determining unit may be configured to determine a manner of selecting the target carrier, and determine the target carrier based on the manner of selecting the target carrier. When a first selection manner is determined, a carrier, on which the measured value of the CBR is lowest may be selected from the first carrier set as the target carrier. When a second selection manner is determined, any carrier may be selected from the first carrier set as the target carrier.

In an implementation, when a third selection manner is determined, the apparatus may determine not to transmit the target data on any carrier.

In an implementation, a data priority of the target data may be a target data priority, and the action of determining not to transmit the target data on any carrier may include determining not to transmit, on any carrier, data corresponding to the target service and/or the target data priority.

In an implementation, the threshold may be configured for a system;
the threshold may be configured for a cell;
the threshold may be configured for the terminal;
the threshold may be configured for a carrier; or
the threshold may be configured for a resource pool on a carrier.

The first carrier set is carrier set mapped to the target data priority of the target data.

In an implementation, the apparatus includes a sending unit, configured to send first configuration information to a terminal, where the first configuration information includes a CBR threshold of at least one carrier, which is a maximum CBR value, for the terminal to determine a target carrier from the at least one carrier and transmit target data by using the target carrier.

In an implementation, the threshold may be configured for a system;
the threshold may be configured for a cell;
the threshold may be configured for the terminal;
the threshold may be configured for a carrier; or
the threshold may be configured for a resource pool on a carrier.

An embodiment of the present disclosure which is outside the scope of the invention as claimed, provides a data transmission apparatus, where the apparatus includes a determining unit and a transmission unit. The determining unit is configured to: when determining that there is no same carrier in a first carrier set and a second carrier set, determine a target carrier from the first carrier set and/or the second carrier set. The transmission unit is configured to: transmit target data by using the target carrier or skip transmitting the target data on any carrier. The first carrier set is a carrier set corresponding to a target service to which the target data belongs, and the second carrier set is a carrier set corresponding to a target data priority of the target data.

In an implementation, the action of determining not to transmit the target data on any carrier may include determining not to transmit, on any carrier, data corresponding to the target service and/or the target data priority.

In an implementation, the determining unit may be configured to determine the target carrier from the first carrier set.

In an implementation, the determining unit may be configured to determine the target carrier from the second carrier set.

In an implementation, the determining unit may be configured to determine a manner of selecting the target carrier, and determine the target carrier based on the manner of selecting the target carrier. When a first selection manner is determined, the target carrier may be determined from the first carrier set. When a second selection manner is determined, the target carrier may be determined from the second carrier set.

In an implementation, when a third selection manner is determined, the apparatus determines not to transmit the target data on any carrier.

In an implementation, the action of determining not to transmit the target data on any carrier may include determining not to transmit, on any carrier, data corresponding to the target service and/or the target data priority.

In an implementation, the first carrier set may be configured by a high layer; and the second carrier set may be configured by an access layer.

An embodiment of the present disclosure which is outside the scope of the invention as claimed, provides a data transmission apparatus, where the apparatus includes a sending unit. The sending unit is configured to send second configuration information to a terminal, where the second configuration information indicates a second carrier set corresponding to a target data priority, where the second carrier set includes at least one first carrier or at least two first carriers, and the first carrier can be mapped to all data priorities.

In an implementation, the first carrier set is configured by a high layer; and the second carrier set is configured by an access layer.

An embodiment of the present disclosure provides a computer storage medium, where the computer storage medium stores computer executable instructions, and the computer executable instructions, when executed by a processor, implement the above data transmission method.

In technical solutions of the embodiments of the disclosure, (1) when determining that a measured value of a CBR of each carrier in a first carrier set is higher than a threshold (that is, transmission of target data is limited by a CBR), a terminal determines a target carrier from the first carrier set, and transmits target data by using the target carrier or determines not to transmit the target data on any carrier; alternatively, when determining that a measured value of a CBR of at least one carrier in a first carrier set is lower than a threshold, a terminal determines a target carrier from the at least one carrier, and transmits target data by using the target carrier, where the first carrier set is a carrier set corresponding to a target service to which the target data belongs; (2) when determining that there is no same carrier in a first carrier set and a second carrier set (that is, transmission of target data is limited by a data priority), the terminal determines a target carrier from the first carrier set and/or the second carrier set, and transmits target data by using the target carrier or determines not to transmit the target data on any carrier; alternatively, when determining that there is a same carrier in a first carrier set and a second carrier set, the terminal determines a target carrier from the same carrier, and transmits target data by using the target carrier, where the first carrier set is a carrier set corresponding to a target service to which the target data belongs, and the second carrier set is a carrier set corresponding to a target data priority of the target data. According to the technical solutions in the embodiments of the disclosure, on one hand, when transmission of target data is limited by the CBR, behavior of the terminal is clarified, that is, it is clarified how the terminal performs carrier selection, and then the terminal uses a selected carrier to transmit the target data; on the other hand, when transmission of target data is limited by the data priority, behavior of the terminal is clarified, that is, it is clarified how the terminal performs carrier selection, and then the terminal uses a selected carrier to transmit the target data.

### BRIEF DESCRIPTION OF THE DRAWINGS

The accompany drawings constituting a part of the application provide further understanding of the disclosure. The schematic embodiments of the disclosure and description thereof are intended to be illustrative of the disclosure and do not constitute an undue limitation of the disclosure. In the accompanying drawings:
FIG. 1 illustrates a schematic scenario diagram of mode 3 in an Internet of Vehicles;
FIG. 2 illustrates a schematic scenario diagram of mode 4 in an Internet of Vehicles;
FIG. 3 illustrates a schematic flowchart 1 of a data transmission method according to an embodiment of the disclosure;
FIG. 4 illustrates a schematic flowchart 2 of a data transmission method according to an embodiment of the disclosure;
FIG. 5 illustrates a schematic flowchart 3 of a data transmission method according to an embodiment of the disclosure;
FIG. 6 illustrates a schematic flowchart 4 of a data transmission method according to an embodiment of the disclosure;
FIG. 7 illustrates a schematic flowchart 5 of a data transmission method according to an embodiment of the disclosure;
FIG. 8 illustrates a schematic flowchart 6 of a data transmission method according to an embodiment of the disclosure;
FIG. 9 illustrates a schematic diagram 1 of structural composition of a data transmission apparatus according to an embodiment of the disclosure;
FIG. 10 illustrates a schematic diagram 2 of structural composition of a data transmission apparatus according to an embodiment of the disclosure; and
FIG. 11 illustrates a schematic diagram of structural composition of a computer device according to an embodiment of the disclosure.

### DETAILED DESCRIPTION

For the convenience of understanding technical solutions of embodiments of the disclosure, mode 3 and mode 4 in the Internet of Vehicles separately are described below.

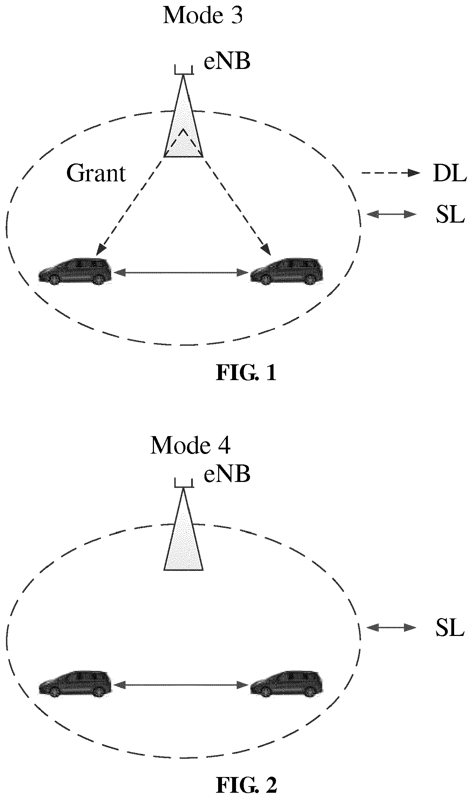

In the mode 3, as illustrated in FIG. 1, a transmission resource of an in-vehicle terminal is allocated by a base station (for example, an Evolved NodeB (eNB) in LTE). Specifically, the base station delivers, to the in-vehicle terminal by using a Down Link (DL), a control message used to indicate a grant (grant) resource, and then the in-vehicle terminal sends data on an SL based on the resource allocated by the base station. In the mode 3, the base station may allocate a resource for single transmission to the in-vehicle terminal, or allocate a resource for semi-static transmission to the terminal.

In the mode 4, as illustrated in FIG. 2, an in-vehicle terminal uses a transmission mode of sensing and reservation. The in-vehicle terminal obtains a set of available transmission resources from a resource pool by sensing, and the in-vehicle terminal selects a resource randomly from the transmission resource set to perform data transmission. A service in an Internet of Vehicles system has a periodic characteristic, and therefore the in-vehicle terminal usually uses a semi-static transmission mode. To be specific, after selecting a transmission resource, the in-vehicle terminal continuously uses the resource in a plurality of transmission periods, so as to reduce the probabilities of resource reselection and resource conflict. The in-vehicle terminal adds, in control information transmitted currently, information about a resource reserved for next transmission. In this way, another terminal may determine, by detecting the control information of the in-vehicle terminal, whether the resource is reserved and used by the in-vehicle terminal, so as to reduce the resource conflict.

It should be noted that, in LTE-V2X, the mode 3 is used to indicate that a transmission resource of the in-vehicle terminal is allocated by the base station and the mode 4 is used to indicate that a transmission resource of the in-vehicle terminal is autonomously selected by the terminal. The technical solutions of the embodiments of the disclosure resolve a carrier selection problem in the mode 4. In a New Radio-Vehicle-to-Everything (NR-V2X) technology, a new transmission mode may be defined. This is not limited in the disclosure.

For carrier selection, a radiofrequency capability of a transmitter needs to be considered. For example, when a carrier 1 and a carrier 2 are selected for signal sending, time-frequency resources selected on the carrier 1 and the carrier 2 need to satisfy the following requirements:
(1) When the time-frequency resources selected on the carrier 1 and the carrier 2 have a same time location, the terminal is required to have a capability of performing simultaneous sending on a plurality of carriers (that is, the terminal supports a capability of performing sending on a plurality of carriers), and the capability of performing sending on a plurality of carriers supports a frequency band combination of the carrier 1 and the carrier 2.
(2) When the time-frequency resources selected on the carrier 1 and the carrier 2 have different time locations, the terminal may perform, by using a single carrier transmitter, switching between different carriers to support sending on the carrier 1 and the carrier 2, but it is required that a time interval between the time-frequency resources selected on the carrier 1 and the carrier 2 is sufficiently long, to satisfy a requirement of a user for a switching delay on the different carriers.

The foregoing requirements indicate that resource selections of the terminal on a plurality of carriers are mutually exclusive, a principle for carrier selection is a problem that the embodiments of the disclosure can resolve.

All technical solutions of the embodiments of the disclosure are not only applicable to the Internet of Vehicles system, but also applicable to another end-to-end communications system. The terminal in the embodiments of the disclosure may be an in-vehicle terminal, a hand-held terminal, a Personal Digital Assistant (PDA), a wearable terminal, or the like; and the network in the embodiments of the disclosure may be an NR network, an LTE network, or the like.

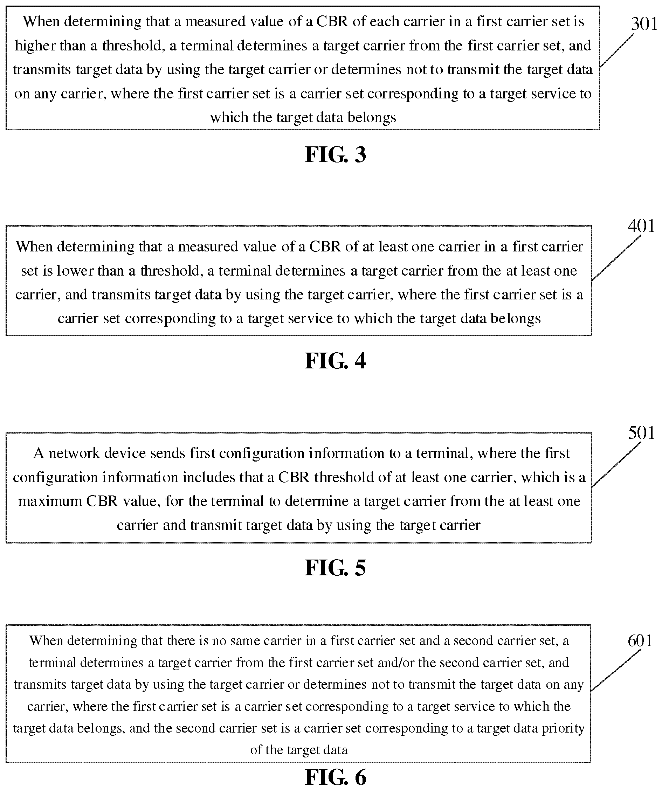

FIG. 3 illustrates a schematic flowchart 1 of a data transmission method according to an embodiment of the disclosure. As illustrated in FIG. 3, the data transmission method includes the following action.

At 301, when determining that a measured value of a CBR of each carrier in a first carrier set is higher than a threshold, a terminal determines a target carrier from the first carrier set, and transmits target data by using the target carrier or determines not to transmit the target data on any carrier, where the first carrier set is a carrier set corresponding to a target service to which the target data belongs.

In this embodiment of the disclosure, the terminal may be a mobile phone, a tablet computer, a laptop, a desktop computer, an in-vehicle terminal, a wearable terminal, or another terminal of any type.

In this embodiment of the disclosure, the first carrier set may be a carrier set corresponding to the target service to which the target data belongs. For example, when the target service to which the target data belongs is a service A, a carrier set to which the service A is mapped is the first carrier set.

In an implementation, the first carrier set may also be a carrier set corresponding to a target data priority of the target data. For example, when the target data priority (herein, the data priority is also called a ProSe Per-Packet Priority (PPPP)) of the target data is PPPP=2, a carrier set to which PPPP=2 is mapped is the first carrier set. It should be understood that, a smaller value of the PPPP indicates a corresponding higher data priority. Generally, a value range of the PPPP is 0 to 7.

In this embodiment of the disclosure, the terminal obtains first configuration information from a network device, and determines a CBR threshold (called a threshold below) of each carrier in the first carrier set based on the first configuration information, where the CBR threshold of the carrier may be configured in one of the following manners:
(1) the threshold is configured for a system;
(2) the threshold is configured for a cell;
(3) the threshold is configured for the terminal;
(4) the threshold is configured for the carrier; or
(5) the threshold is configured for a resource pool on the carrier.

In this embodiment of the disclosure, when a measured value of a CBR of a carrier is higher than a corresponding threshold, the carrier cannot be used to transmit target data; or when a measured value of a CBR of a carrier is lower than a corresponding threshold, the carrier can be used to transmit target data. When determining that the measured value of the CBR of each carrier in the first carrier set is higher than the threshold (that is, transmission of the target data is limited by the CBR), the terminal may perform an operation in one of the following manners:
Manner 1: the terminal determines not to transmit the target data on any carrier.
   Assuming that a data priority of the target data is a target data priority, the terminal determines not to transmit, on any carrier, data corresponding to the target service and/or the target data priority.
Manner 2: the terminal selects, from the first carrier set, a carrier, on which the measured value of the CBR is lowest, as the target carrier for transmitting the target data.
Manner 3: the terminal selects any carrier from the first carrier set as the target carrier for transmitting the target data.
Manner 4: the terminal determines a manner of selecting the target carrier, determines the target carrier based on the manner of selecting the target carrier, and transmitting the target data by using the target carrier, where.
   (1) when the terminal determines a first selection manner, the terminal selects, from the first carrier set, a carrier, on which the measured value of the CBR is lowest, as the target carrier for transmitting the target data; and
   (2) when the terminal determines a second selection manner, the terminal selects, from the first carrier set, any carrier as the target carrier for transmitting the target data.
Manner 5: the terminal determines a manner of selecting the target carrier, determines the target carrier based on the manner of selecting the target carrier, and transmits the target data by using the target carrier, where
   (1) when the terminal determines a first selection manner, the terminal selects, from the first carrier set, a carrier, on which the measured value of the CBR is lowest, as the target carrier for transmitting the target data;
   (2) when the terminal determines a second selection manner, the terminal selects, from the first carrier set, any carrier as the target carrier for transmitting the target data; and
   (3) when the terminal determines a third selection manner, the terminal determines not to transmit the target data on any carrier.

In an implementation, the terminal determines not to transmit, on any carrier, data corresponding to the target service and/or the target data priority.

FIG. 4 illustrates a schematic flowchart 2 of a data transmission method according to an embodiment of the disclosure. As illustrated in FIG. 4, the data transmission method includes the following action.

At 401, when determining that a measured value of a CBR of at least one carrier in a first carrier set is lower than a threshold, a terminal determines a target carrier from the at least one carrier, and transmits target data by using the target carrier, where the first carrier set is a carrier set corresponding to a target service to which the target data belongs.

In this embodiment of the disclosure, the terminal may be a mobile phone, a tablet computer, a laptop, a desktop computer, an in-vehicle terminal, a wearable terminal, or another terminal of any type.

In this embodiment of the disclosure, the first carrier set is a carrier set corresponding to the target service to which the target data belongs. For example, when the target service to which the target data belongs is a service A, a carrier set to which the service A is mapped is the first carrier set.

In an implementation, the first carrier set is also a carrier set corresponding to a target data priority of the target data. For example, when the target data priority (herein, the data priority is also called a ProSe Per-Packet Priority (PPPP)) of the target data is PPPP=2, a carrier set to which PPPP=2 is mapped is the first carrier set. It should be understood that, a smaller value of the PPPP indicates a corresponding higher data priority. Generally, a value range of the PPPP is 0 to 7.

In this embodiment of the disclosure, the terminal obtains first configuration information from a network device, and determines a CBR threshold (called a threshold below) of each carrier in the first carrier set based on the first configuration information, where the threshold of the carrier may be configured in one of the following manners:
(1) the threshold is configured for a system;
(2) the threshold is configured for a cell;
(3) the threshold is configured for the terminal;
(4) the threshold is configured for the carrier; or
(5) the threshold is configured for a resource pool on the carrier.

In this embodiment of the disclosure, when a measured value of a CBR of a carrier is higher than a corresponding threshold, the carrier cannot be used to transmit target data; or when a measured value of a CBR of a carrier is lower than a corresponding threshold, the carrier can be used to transmit target data. When determining that the measured value of the CBR of the at least one carrier in the first carrier set is lower than the threshold, the terminal determines a target carrier from the at least one carrier, and transmits the target data by using the target carrier.

In an implementation, the terminal determines, based on first configuration information of an access layer, that a threshold of at least one carrier in the first carrier set is a maximum CBR value, and determines that a measured value of a CBR of the at least one carrier is lower than the threshold. For example, when the access layer configures that the CBR threshold of the at least one carrier is a maximum value (that is, 100%), the measured value of a CBR of the at least one carrier is definitely lower than the configured threshold (that is, 100%), in this case, the at least one carrier may be used to transmit the target data. The terminal may select, from these carriers that can be used to transmit the target data, a carrier to transmit the target data.

For example, the first carrier set includes a carrier 1, a carrier 2, a carrier 3, and a carrier 4, where CBR thresholds of the carrier 1 and the carrier 3 are 100%. Because ranges of measured values of CBRs of the carrier 1 and the carrier 3 are 0% to 100%, the measured values of the CBRs of the carrier 1 and the carrier 3 are definitely lower than the corresponding threshold. The terminal may select a carrier from the carrier 1 and the carrier 3 to transmit the target data.

FIG. 5 illustrates a schematic flowchart 3 of a data transmission method according to an embodiment of the disclosure. As illustrated in FIG. 5, the data transmission method includes the following action.

At 501, a network device sends first configuration information to a terminal, where the first configuration information includes that a CBR threshold of at least one carrier is a maximum CBR value, for the terminal to determine a target carrier from the at least one carrier and transmit target data by using the target carrier.

In an implementation, the first configuration information may be used by the terminal to determine a threshold of each carrier in the first carrier set, where a threshold of the at least one carrier in the first carrier set is a maximum CBR value.

In an implementation, the threshold may be configured for a system; the threshold may be configured for a cell; the threshold may be configured for the terminal; the threshold may be configured for a carrier; or the threshold may be configured for a resource pool on a carrier.

In an implementation, the first carrier set may also be a carrier set corresponding to a target data priority of the target data.

FIG. 6 illustrates a schematic flowchart 4 of a data transmission method according to an embodiment of the disclosure. As illustrated in FIG. 6, the data transmission method includes the following action.

At 601, when determining that there is no same carrier in a first carrier set and a second carrier set, a terminal determines a target carrier from the first carrier set and/or the second carrier set, and transmits target data by using the target carrier or determines not to transmit the target data on any carrier. The first carrier set is a carrier set corresponding to a target service to which the target data belongs, and the second carrier set is a carrier set corresponding to a target data priority of the target data.

In this embodiment of the disclosure, the terminal may be a mobile phone, a tablet computer, a laptop, a desktop computer, an in-vehicle terminal, a wearable terminal, or another terminal of any type.

In this embodiment of the disclosure, the first carrier set is a carrier set corresponding to the target service to which the target data belongs. For example, when the target service to which the target data belongs is a service A, a carrier set to which the service A is mapped is the first carrier set.

In an implementation, the second carrier set is also a carrier set corresponding to the target data priority of the target data. For example, when the target data priority (herein, the data priority is also called a ProSe Per-Packet Priority (PPPP)) of the target data is PPPP=2, a carrier set to which PPPP=2 is mapped is the second carrier set. It should be understood that, a smaller value of the PPPP indicates a corresponding higher data priority. Generally, a value range of the PPPP is 0 to 7.

In this embodiment of the disclosure, when determining that there is no same carrier in the first carrier set and the second carrier set (that is, transmission of the target data is limited by a data priority), the terminal may perform an operation in one of the following manners:
Manner 1: the terminal determines not to transmit the target data on any carrier.
   Assuming that a data priority of the target data is a target data priority, the terminal determines not to transmit, on any carrier, data corresponding to the target service and/or the target data priority.
Manner 2: the terminal determines a target carrier from the first carrier set, and transmits the target data by using the target carrier.
   Herein, the terminal does not consider "a carrier set corresponding to a data priority of the target data", but performs carrier selection and data sending based on "a carrier set corresponding to a service to which the target data belongs".
Manner 3: the terminal determines a target carrier from the second carrier set, and transmits the target data by using the target carrier.
   Herein, the terminal does not consider "a carrier set corresponding to a service to which the target data belongs", but only performs carrier selection and data sending based on "a carrier set corresponding to a data priority of the target data".
Manner 4: the terminal determines a manner of selecting a target carrier, determines the target carrier based on the manner of selecting the target carrier, and transmits the target data by using the target carrier, where
   (1) when the terminal determines a first selection manner, the terminal determines the target carrier from the first carrier set, and transmits the target data by using the target carrier; and
   (2) when the terminal determines a second selection manner, the terminal determines the target carrier from the second carrier set, and transmits the target data by using the target carrier.
Manner 5: the terminal determines a manner of selecting a target carrier, determines the target carrier based on the manner of selecting the target carrier, and transmits the target data by using the target carrier, where
   (1) when the terminal determines a first selection manner, the terminal determines the target carrier from the first carrier set, and transmits the target data by using the target carrier;
   (2) when the terminal determines a second selection manner, the terminal determines the target carrier from the second carrier set, and transmits the target data by using the target carrier; and
   (3) when the terminal determines a third selection manner, the terminal determines not to transmit the target data on any carrier.

In an implementation, the terminal determines not to transmit, on any carrier, data corresponding to the target service and/or the target data priority.

In this embodiment of the disclosure, the first carrier set is configured by a high layer, and the second carrier set is configured by an access layer.

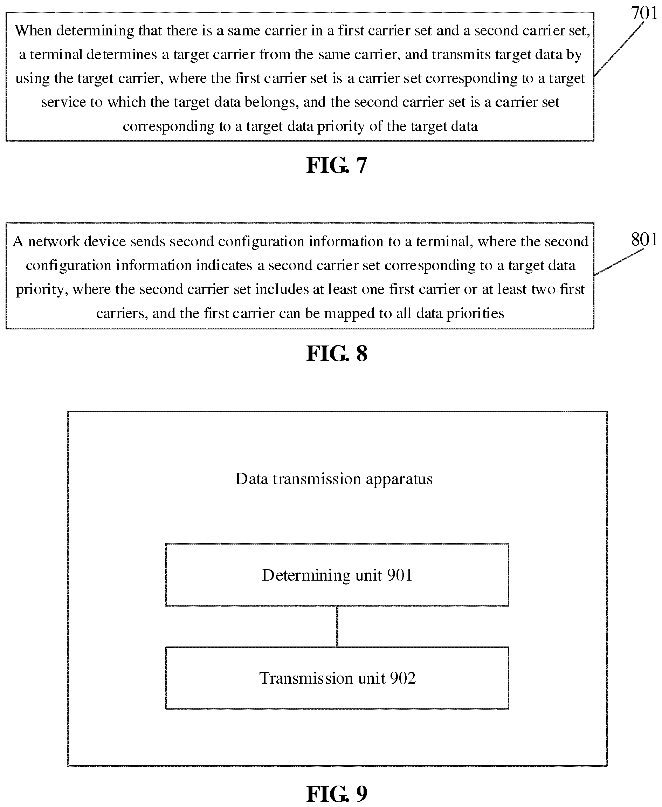

FIG. 7 illustrates a schematic flowchart 5 of a data transmission method according to an embodiment of the disclosure. As illustrated in FIG. 7, the data transmission method includes the following action.

At 701, when determining that there is a same carrier in a first carrier set and a second carrier set, a terminal determines a target carrier from the same carrier, and transmits target data by using the target carrier. The first carrier set is a carrier set corresponding to a target service to which the target data belongs, and the second carrier set is a carrier set corresponding to a target data priority of the target data.

In this embodiment of the disclosure, the terminal may be a mobile phone, a tablet computer, a laptop, a desktop computer, an in-vehicle terminal, a wearable terminal, or another terminal of any type.

In this embodiment of the disclosure, the first carrier set may be a carrier set corresponding to the target service to which the target data belongs. For example, when the target service to which the target data belongs is a service A, a carrier set to which the service A is mapped is the first carrier set.

In an implementation, the second carrier set may also be a carrier set corresponding to the target data priority of the target data. For example, when the target data priority (herein, the data priority is also called a ProSe Per-Packet Priority (PPPP)) of the target data is PPPP=2, a carrier set to which PPPP=2 is mapped is the second carrier set. It should be understood that, a smaller value of the PPPP indicates a corresponding higher data priority. Generally, a value range of the PPPP is 0 to 7.

In this embodiment of the disclosure, when determining that there is a same carrier in the first carrier set and the second carrier set, the terminal determines a target carrier from the same carrier, and transmits target data by using the target carrier. For example, when the first carrier set includes a carrier 1, a carrier 2, a carrier 3, and a carrier 4, and the second carrier set includes the carrier 1, the carrier 4, a carrier 5, and a carrier 6, same carriers in the first carrier set and the second carrier set are the carrier 1 and the carrier 4, and the terminal selects a carrier from the carrier 1 and the carrier 4 for transmitting the target data.

In an implementation, the second carrier set includes at least one first carrier or at least two first carriers, and the first carrier can be mapped to all data priorities; and the second carrier set includes at least one first carrier or at least two first carriers. In this case, the first carrier set and the second carrier set include a same carrier, that is, the first carrier.

In this embodiment of the disclosure, the first carrier set is configured by a high layer, and the second carrier set is configured by an access layer.

FIG. 8 illustrates a schematic flowchart 6 of a data transmission method according to an embodiment of the disclosure. As illustrated in FIG. 8, the data transmission method includes the following action.

At 801, a network device sends second configuration information to a terminal, where the second configuration information indicates a second carrier set corresponding to a target data priority, where the second carrier set includes at least one first carrier or at least two first carriers, and the first carrier can be mapped to all data priorities.

In an implementation, the first carrier set is configured by a high layer, and the second carrier set is configured by an access layer.

FIG. 9 illustrates a schematic diagram 1 of structural composition of a data transmission apparatus according to an embodiment of the disclosure. The data transmission apparatus in this embodiment of the disclosure is applied to a terminal side. As illustrated in FIG. 9, the data transmission apparatus includes a determining unit 901 and a transmission unit 902. The following describes functions of the data transmission apparatus in this embodiment of the disclosure with reference to specific implementation solutions.

### Example 1:

The determining unit 901 is configured to, when determining that a measured value of a CBR of each carrier in a first carrier set is higher than a threshold, determine a target carrier from the first carrier set.

The transmission unit 902 is configured to: transmit target data by using the target carrier or skip transmitting the target data on any carrier.

The first carrier set is a carrier set corresponding to a target service to which the target data belongs.

In an implementation, a data priority of the target data may be a target data priority. The action of determining not to transmit the target data on any carrier may include, determining not to transmit, on any carrier, data corresponding to the target service and/or the target data priority.

In an implementation, the determining unit 901 may be configured to select, from the first carrier set, a carrier, on which the measured value of the CBR is lowest as the target carrier.

In an implementation, the determining unit 901 may be configured to select any carrier from the first carrier set as the target carrier.

In an implementation, the determining unit 901 may be configured to determine a manner of selecting the target carrier, and determine the target carrier based on the manner of selecting the target carrier. When a first selection manner is determined, a carrier, on which the measured value of the CBR is lowest may be selected from the first carrier set as the target carrier. When a second selection manner is determined, any carrier may be selected from the first carrier set as the target carrier.

In an implementation, when a third selection manner is determined, the target data may not be transmitted on any carrier.

In an implementation, a data priority of the target data may be a target data priority. The action of determining not to transmit the target data on any carrier may include, determining not to transmit, on any carrier, data corresponding to the target service and/or the target data priority.

In an implementation, the threshold may be configured for a system;
the threshold may be configured for a cell;
the threshold may be configured for the terminal;
the threshold may be configured for a carrier; or
the threshold may be configured for a resource pool on a carrier.

In an implementation, the first carrier set may also be a carrier set corresponding to the target data priority of the target data.

### Example 2:

The determining unit 901 is configured to, when determining that a measured value of a CBR of at least one carrier in a first carrier set is lower than a threshold, determine a target carrier from the at least one carrier set.

The transmission unit 902 is configured to transmit target data by using the target carrier.

The first carrier set is a carrier set corresponding to a target service to which the target data belongs.

In an implementation, the determining unit 901 may be configured to determine, based on first configuration information of an access layer, that a threshold of the at least one carrier in the first carrier set is a maximum CBR value, and determine that the measured value of a CBR of the at least one carrier is lower than the threshold.

In an implementation, the threshold may be configured for a system;
the threshold may be configured for a cell;
the threshold may be configured for the terminal;
the threshold may be configured for a carrier; or
the threshold may be configured for a resource pool on a carrier.

In an implementation, the first carrier set may also be a carrier set corresponding to a target data priority of the target data.

### Example 3:

The determining unit 901 is configured to, when determining that there is no same carrier in a first carrier set and a second carrier set, determine a target carrier from the first carrier set and/or the second carrier set.

The transmission unit 902 is configured to: transmit target data by using the target carrier or skip transmitting the target data on any carrier.

The first carrier set is a carrier set corresponding to a target service to which the target data belongs, and the second carrier set is a carrier set corresponding to a target data priority of the target data.

In an implementation, the action of determining not to transmit the target data on any carrier may include determining not to transmit, on any carrier, data corresponding to the target service and/or the target data priority.

In an implementation, the determining unit 901 may be configured to determine a target carrier from the first carrier set.

In an implementation, the determining unit 901 may be configured to determine a target carrier from the second carrier set.

In an implementation, the determining unit 901 may be configured to, determine a manner of selecting the target carrier, and determine a target carrier based on the manner of selecting the target carrier.

When a first selection manner is determined, the target carrier may be determined from the first carrier set.

When a second selection manner is determined, the target carrier may be determined from the second carrier set.

In an implementation, when a third selection manner is determined, the target data may not be transmitted on any carrier.

In an implementation, the action of determining not to transmit the target data on any carrier may include determining not to transmit, on any carrier, data corresponding to the target service and/or the target data priority.

In an implementation, the first carrier set may be configured by a high layer, and the second carrier set may be configured by an access layer.

### Example 4:

The determining unit 901 is configured to, when determining that there is a same carrier in a first carrier set and a second carrier set, determine a target carrier from the same carrier.

The transmission unit 902 is configured to transmit target data by using the target carrier.

The first carrier set is a carrier set corresponding to a target service to which the target data belongs, and the second carrier set is a carrier set corresponding to a target data priority of the target data.

In an implementation, the second carrier set may include at least one first carrier or at least two first carriers, and the first carrier can be mapped to all data priorities.

The second carrier set may include at least one first carrier or at least two first carriers.

In an implementation, the first carrier set may be configured by a high layer, and the second carrier set may be configured by an access layer.

A person skilled in the art should understand that, an implementation function of each unit of the data transmission apparatus illustrated in FIG. 9 may be seen from related description of the foregoing data transmission methods for understanding. The function of each unit of the data transmission apparatus illustrated in FIG. 9 may be implemented by running a program in a processor, or may be implemented by using a specific logic circuit.

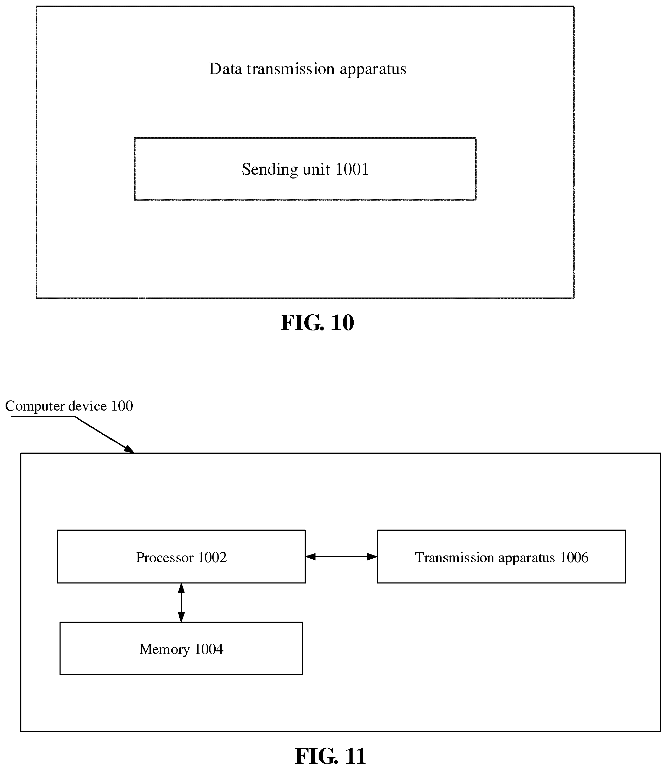

FIG. 10 illustrates a schematic diagram 2 of structural composition of a data transmission apparatus according to an embodiment of the disclosure. The data transmission apparatus in this embodiment of the disclosure is applied to a network device side. As illustrated in FIG. 10, the data transmission apparatus includes a sending unit 1001. The following describes functions of the data transmission apparatus in this embodiment of the disclosure with reference to specific implementation solutions.

### Example 5:

The sending unit 1001 is configured to send first configuration information to a terminal, where the first configuration information includes that a CBR threshold of at least one carrier is a maximum CBR value, for the terminal to determine a target carrier from the at least one carrier and transmit target data by using the target carrier.

In an implementation, the threshold may be configured for a system,
the threshold may be configured for a cell;
the threshold may be configured for the terminal;
the threshold may be configured for a carrier; or
the threshold may be configured for a resource pool on a carrier.

### Example 6:

The sending unit 1001 is configured to send second configuration information to a terminal, where the second configuration information indicates a second carrier set corresponding to a target data priority.

The second carrier set includes at least one first carrier or at least two first carriers, and the first carrier can be mapped to all data priorities.

In an implementation, the first carrier set may be configured by a high layer, and the second carrier set may be configured by an access layer.

A person skilled in the art should understand that, an implementation function of each unit of the data transmission apparatus illustrated in FIG. 10, may be seen from related description of the foregoing data transmission methods for understanding. The function of each unit of the data transmission apparatus illustrated in FIG. 9 may be implemented by running a program in a processor, or may be implemented by using a specific logic circuit.

In the embodiments of the disclosure, when the data transmission apparatus is implemented in the form of a software function module and is sold or used as a stand-alone product, the module may also be stored in a computer readable storage medium. Based on this understanding, the technical solution of the embodiments of the disclosure essentially, or a part contributing to the prior art, or all or a part of the technical solution may be embodied in a form of a software product. The computer software product is stored in a storage medium, and includes several instructions to enable a computer device (which may be a personal computer, a server, or a network device) to execute all or some of the method according to the embodiments of the disclosure. The foregoing storage medium includes various media that can store program code, such as a USB flash disk, a mobile hard disk, a read-only memory (ROM), a magnetic disk, or an optical disc. Thus, the embodiments of the disclosure are not limited to any specific hardware and software combination.

Accordingly, an embodiment of the disclosure further provides a computer storage medium. The computer storage medium stores a computer program for performing the above data transmission method of an embodiment of the disclosure.

FIG. 11 illustrates a schematic diagram of structural composition of a computer device according to an embodiment of the disclosure. The computer device may be a terminal, or may be a network device. As illustrated in FIG. 11, the computer device 100 may include one or more (only one processor 1002 is illustrated in the figure) processor 1002 (the processor 1002 may include but not limited to a Micro Controller Unit (MCU), a Field Programmable Gate Array (FPGA), or another processing apparatus), a memory 1004 configured to store data, and a transmission apparatus 1006 configured to implement a communication function. A person of ordinary skill in the art may understand that, a structure illustrated in FIG. 11 is only an example, and does not limit a structure of the foregoing electronic apparatus. For example, the computer device 100 may alternatively include components more or less than that those illustrated in FIG. 11, or have a configuration different from that illustrated in FIG. 11.

The memory 1004 may be configured to store a software program of application software and a module, such as a program instruction/module corresponding to the method in the embodiments of the disclosure. The processor 1002 performs various function applications and data processing by running the software program and module stored in the memory 1004, that is, implements the foregoing method. The memory 1004 may include a high-speed random memory and may further include a nonvolatile memory such as one or more magnetic storage apparatuses, flash memories, or other nonvolatile solid-state memories. In some examples, the memory 1004 may further include a memory that is remotely configured relative to the processor 1002, and the remote memory can be connected to the computer device 100 by using a network. An example of the foregoing network includes but is not limited to the Internet, an intranet, a local area network, a mobile communications network, and a combination thereof.

The transmission apparatus 1006 is configured to receive or send data through a network. A specific example of the foregoing network may include a wireless network provided by a communication supplier of the computer device 100. In an example, the transmission apparatus 1006 includes a Network Interface Controller (NIC), and the network interface controller is connected to another network device by using a base station, so as to perform communication with the Internet. In an example, the transmission apparatus 1006 may be a Radio Frequency (RF) module, and the radio frequency module is configured to communicate with the Internet in a wireless manner.

The technical solutions recorded in the embodiments of the disclosure may be randomly combined when there is no conflict.

In several embodiments provided in the disclosure, it should be understood that, methods and intelligent devices disclosed may be implemented in another manner. For example, the described device embodiment is merely an example. For example, the unit division is merely logical function division and may be other division in actual implementation. For example, a plurality of units or components may be combined or integrated into another system, or some features may be ignored or not performed. In addition, the intercoupling or direct coupling or communication connection illustrated or discussed may be indirect coupling or communication connection through some interfaces, devices, or units; or may be implemented in electrical, mechanical, or other forms.

The units described as separate parts may or may not be physically separate. Parts displayed as units may or may not be physical units, which may be located in one position, or may be distributed on a plurality of network units. Some or all of the units may be selected according to actual needs to achieve the objectives of the solutions of the embodiments.

In addition, functional units in the embodiments of the disclosure may be integrated into a second processing module, or each of the units may exist alone physically, or two or more units are integrated into one unit. The foregoing integrated unit can be implemented either in the form of hardware or in the form of software functional units.

The above merely describes specific embodiments of the disclosure, but the protection scope of the disclosure is not limited thereto. A person skilled in the art can easily conceive modifications or replacements within the technical scope of the disclosure.

## Claims

1. A data transmission method, the method comprises the following actions performed by a terminal:
when determining that a measured value of a channel busy ratio, CBR, of at least one carrier in a first carrier set is lower than a threshold,
determining a target carrier from the at least one carrier, and transmitting target data by using the target carrier;
when determining (301) that the measured value of the CBR of each carrier in the first carrier set is higher than the threshold,
determining (301) the target carrier from the first carrier set, and transmitting the target data by using the target carrier;
wherein the first carrier set is a carrier set corresponding to a target service to which the target data belongs, and
wherein the first carrier set is also a carrier set mapped to target data priority of the target data.

2. The method of claim 1, wherein a data priority of the target data is a target data priority, and
the method further comprises: determining (301) not to transmit the target data on any carrier;
wherein the determining not to transmit the target data on any carrier comprises:
determining not to transmit, on any carrier, data corresponding to at least one of the target service or the target data priority.

3. The method of claim 1, wherein determining the target carrier from the first carrier set, and transmitting target data by using the target carrier comprises:
selecting, by the terminal from the first carrier set, a carrier, on which the measured value of the CBR is lowest, as the target carrier for transmitting the target data.

4. The method of claim 1, wherein determining, the target carrier from the first carrier set, and transmitting target data by using the target carrier comprises:
selecting, by the terminal, any carrier from the first carrier set, as the target carrier for transmitting the target data.

5. The method of claim 1, wherein determining the target carrier from the first carrier set, and transmitting target data by using the target carrier comprises:
determining, by the terminal, a manner of selecting the target carrier,
determining the target carrier based on the manner of selecting the target carrier, and
transmitting the target data by using the target carrier, wherein
when the terminal determines a first selection manner, the terminal selects, from the first carrier set, a carrier, on which the measured value of the CBR is lowest, as the target carrier for transmitting the target data; and
when the terminal determines a second selection manner, the terminal selects, from the first carrier set, any carrier, as the target carrier for transmitting the target data.

6. The method of claim 5, wherein the method further comprises:
when the terminal determines a third selection manner, determining, by the terminal, not to transmit the target data on any carrier.

7. The method of claim 6, wherein a data priority of the target data is a target data priority, and
wherein the determining, by the terminal, not to transmit the target data on any carrier comprises:
determining not to transmit, on any carrier, data corresponding to at least one of the target service or the target data priority.

8. The method according to any one of claims 1 to 7, wherein
the threshold is configured for a system;
the threshold is configured for a cell;
the threshold is configured for the terminal;
the threshold is configured for a carrier; or
the threshold is configured for a resource pool on a carrier.

9. A data transmission apparatus, the apparatus comprises:
a determining unit (901), configured to,
when determining that a measured value of a channel busy ratio, CBR, of at least one carrier in a first carrier set is lower than a threshold,
determine a target carrier from the at least one carrier,
when determining that the measured value of the CBR of each carrier in the first carrier set is higher than the threshold,
determine the target carrier from the first carrier set, and
a transmission unit (902), configured to transmit target data by using the target carrier,
wherein the first carrier set is a carrier set corresponding to a target service to which the target data belongs, and
wherein the first carrier set is also a carrier set mapped to target data priority of the target data.

10. The apparatus of claim 9, wherein a data priority of the target data is a target data priority, and
the determining unit (901) is further configured to determine not to transmit the target data on any carrier;
wherein the determining not to transmit the target data on any carrier comprises:
determining not to transmit, on any carrier, data corresponding to at least one of the target service or the target data priority.

11. The apparatus of claim 9, wherein the determining unit is configured to select, from the first carrier set, a carrier, on which the measured value of the CBR is lowest, as the target carrier.

12. The apparatus of claim 9, wherein the determining unit is configured to select any carrier from the first carrier set as the target carrier.

13. The apparatus of claim 9, wherein the determining unit is configured to determine a manner of selecting the target carrier, and determine the target carrier based on the manner of selecting the target carrier, wherein
when a first selection manner is determined, a carrier, on which the measured value of the CBR is lowest, is selected from the first carrier set as the target carrier; and
when a second selection manner is determined, any carrier is selected from the first carrier set as the target carrier.

14. The apparatus of claim 13, wherein when a third selection manner is determined, the apparatus determines not to transmit the target data on any carrier.

15. The apparatus of claim 14, wherein a data priority of the target data is a target data priority, and
the determining not to transmit the target data on any carrier comprises:
determining not to transmit, on any carrier, data corresponding to at least one of the target service or the target data priority.

16. The apparatus according to any one of claims 9 to 15, wherein
the threshold is configured for a system;
the threshold is configured for a cell;
the threshold is configured for the terminal;
the threshold is configured for a carrier; or
the threshold is configured for a resource pool on a carrier.

## Patentansprüche

1. Datensendeverfahren, wobei das Verfahren die folgenden durch ein Endgerät ausgeführten Aktionen umfasst:
wenn bestimmt wird, dass ein gemessener Wert eines Kanalbesetztverhältnisses, CBR, wenigstens eines Trägers in einer ersten Trägergruppe niedriger ist als ein Schwellenwert,
Bestimmen eines Zielträgers aus dem wenigstens einen Träger und Senden von Zieldaten unter Verwendung des Zielträgers;
wenn bestimmt wird (301), dass der gemessene Wert des CBR jedes Trägers in der ersten Trägergruppe höher ist als der Schwellenwert,
Bestimmen (301) des Zielträgers aus der ersten Trägergruppe und Senden der Zieldaten unter Verwendung des Zielträgers;
wobei die erste Trägergruppe eine Trägergruppe ist, die einem Zieldienst, zu dem die Zieldaten gehören, entspricht, und
wobei die erste Trägergruppe außerdem eine Trägergruppe ist, die auf die Zieldatenpriorität der Zieldaten abgebildet wird.

2. Verfahren nach Anspruch 1, wobei eine Datenpriorität der Zieldaten eine Zieldatenpriorität ist, und
das Verfahren ferner Folgendes umfasst: Bestimmen (301), die Zieldaten nicht auf irgendeinem Träger zu senden;
wobei das Bestimmen, die Zieldaten nicht auf irgendeinem Träger zu senden, Folgendes umfasst:
Bestimmen, Daten, die dem Zieldienst und/oder der Zieldatenpriorität entsprechen, nicht auf irgendeinem Träger zu senden.

3. Verfahren nach Anspruch 1, wobei das Bestimmen des Zielträgers aus der ersten Trägergruppe und das Senden von Zieldaten unter Verwendung des Zielträgers Folgendes umfasst:
Auswählen durch das Endgerät aus der ersten Trägergruppe eines Trägers, auf dem der gemessene Wert des CBR am niedrigsten ist, als den Zielträger zum Senden der Zieldaten.

4. Verfahren nach Anspruch 1, wobei das Bestimmen des Zielträgers aus der ersten Trägergruppe und das Senden von Zieldaten unter Verwendung des Zielträgers Folgendes umfasst:
Auswählen durch das Endgerät irgendeines Trägers aus der ersten Trägergruppe als den Zielträger zum Senden der Zieldaten.

5. Verfahren nach Anspruch 1, wobei das Bestimmen des Zielträgers aus der ersten Trägergruppe und das Senden von Zieldaten unter Verwendung des Zielträgers Folgendes umfasst:
Bestimmen durch das Endgerät einer Art und Weise zum Auswählen des Zielträgers,
Bestimmen des Zielträgers basierend auf der Art und Weise zum Auswählen des Zielträgers und
Senden der Zieldaten unter Verwendung des Zielträgers, wobei
dann, wenn das Endgerät die erste Art und Weise der Auswahl bestimmt, das Endgerät aus der ersten Trägergruppe einen Träger, auf dem der gemessene Wert des CBR am niedrigsten ist, als den Zielträger zum Senden der Zieldaten auswählt; und
wenn das Endgerät eine zweite Art und Weise der Auswahl bestimmt, das Endgerät aus der ersten Trägergruppe irgendeinen Träger als den Träger zum Senden der Zieldaten auswählt.

6. Verfahren nach Anspruch 5, wobei das Verfahren ferner Folgendes umfasst:
wenn das Endgerät eine dritte Art und Weise der Auswahl bestimmt, Bestimmen durch das Endgerät, die Zieldaten nicht auf irgendeinem Träger zu senden.

7. Verfahren nach Anspruch 6, wobei eine Datenpriorität der Zieldaten eine Zieldatenpriorität ist, und
wobei das Bestimmen durch das Endgerät, die Zieldaten nicht auf irgendeinem Träger zu senden, Folgendes umfasst:
Bestimmen, Daten, die dem Zieldienst und/oder der Zieldatenpriorität entsprechen, nicht auf irgendeinem Träger zu senden.

8. Verfahren nach einem der Ansprüche 1 bis 7, wobei
der Schwellenwert für ein System konfiguriert ist;
der Schwellenwert für eine Zelle konfiguriert ist;
der Schwellenwert für das Endgerät konfiguriert ist;
der Schwellenwert für einen Träger konfiguriert ist; oder
der Schwellenwert für einen Betriebsmittelpool auf einem Träger konfiguriert ist.

9. Datensendeeinrichtung, wobei die Einrichtung Folgendes umfasst:
eine Bestimmungseinheit (901), die konfiguriert ist,
dann, wenn bestimmt wird, dass ein gemessener Wert eines Kanalbesetztverhältnisses, CBR, wenigstens eines Trägers in einer ersten Trägergruppe niedriger ist als ein Schwellenwert,
einen Zielträger aus dem wenigstens einen Träger zu bestimmen, und
dann, wenn bestimmt wird, dass der gemessene Wert des CBR jedes Trägers in der ersten Trägergruppe höher ist als der Schwellenwert,
den Zielträger aus der ersten Trägergruppe zu bestimmen, und
eine Sendeeinheit (902), die konfiguriert ist, die Zieldaten unter Verwendung des Zielträgers zu senden,
wobei die erste Trägergruppe eine Trägergruppe ist, die einem Zieldienst, zu dem die Zieldaten gehören, entspricht, und
wobei die erste Trägergruppe außerdem eine Trägergruppe ist, die auf Zieldatenpriorität der Zieldaten abgebildet ist.

10. Einrichtung nach Anspruch 9, wobei eine Datenpriorität der Zieldaten eine Zieldatenpriorität ist und
die Bestimmungseinheit (901) ferner konfiguriert ist zu bestimmen, die Zieldaten nicht auf irgendeinem Träger zu senden;
wobei das Bestimmen, die Zieldaten nicht auf irgendeinem Träger zu senden, Folgendes umfasst:
Bestimmen, Daten, die dem Zieldienst und/oder der Zieldatenpriorität entsprechen, nicht auf irgendeinem Träger zu senden.

11. Einrichtung nach Anspruch 9, wobei die Bestimmungseinheit konfiguriert ist, aus der ersten Trägergruppe einen Träger, auf dem der gemessene Wert des CBR am niedrigsten ist, als den Zielträger auszuwählen.

12. Einrichtung nach Anspruch 9, wobei die Bestimmungseinheit konfiguriert ist, irgendeinen Träger aus der ersten Trägergruppe als den Zielträger auszuwählen.

13. Einrichtung nach Anspruch 9, wobei die Bestimmungseinheit konfiguriert ist, eine Art und Weise zum Auswählen des Zielträgers zu bestimmen und den Zielträger basierend auf der Art und Weise zum Auswählen des Zielträgers zu bestimmen, wobei
dann, wenn eine erste Art und Weise der Auswahl bestimmt wird, ein Träger, auf dem der gemessene Wert des CBR am niedrigsten ist, aus der ersten Trägergruppe als der Zielträger ausgewählt wird; und
dann, wenn eine zweite Art und Weise der Auswahl bestimmt wird, irgendein Träger aus der ersten Trägergruppe als der Zielträger ausgewählt wird.

14. Einrichtung nach Anspruch 13, wobei dann, wenn eine dritte Art und Weise der Auswahl bestimmt wird, die Einrichtung bestimmt, die Zieldaten nicht auf irgendeinem Träger zu senden.

15. Einrichtung nach Anspruch 14, wobei eine Datenpriorität der Zieldaten eine Zieldatenpriorität ist, und
das Bestimmen, die Zieldaten nicht auf irgendeinem Träger zu senden, Folgendes umfasst:
Bestimmen, Daten, die dem Zieldienst und/oder der Zieldatenpriorität entsprechen, nicht auf irgendeinem Träger zu senden.

16. Einrichtung nach einem der Ansprüche 9 bis 15, wobei
der Schwellenwert für ein System konfiguriert ist;
der Schwellenwert für eine Zelle konfiguriert ist;
der Schwellenwert für das Endgerät konfiguriert ist;
der Schwellenwert für einen Träger konfiguriert ist; oder
der Schwellenwert für einen Betriebsmittelpool auf einem Träger konfiguriert ist.

## Revendications

1. Procédé de transmission de données, le procédé comprenant les actions suivantes effectuées par un terminal :
lorsqu'il est déterminé qu'une valeur mesurée d'un taux d'activité de canal, CBR, d'au moins une porteuse d'un premier ensemble de porteuses est inférieure à seuil,
déterminer une porteuse cible à partir de ladite au moins une porteuse, et transmettre des données cibles en utilisant la porteuse cible ;
lorsqu'il est déterminé (301) que la valeur mesurée du CBR de chaque porteuse du premier ensemble de porteuses est supérieure au seuil,
déterminer (301) la porteuse cible dans le premier ensemble de porteuses, et transmettre les données cibles en utilisant la porteuse cible ;
dans lequel le premier ensemble de porteuses est un ensemble de porteuses correspondant à un service cible auquel les données cibles appartiennent, et
dans lequel le premier ensemble de porteuses est également un ensemble de porteuses mis en correspondance avec une priorité de données cible des données cibles.

2. Procédé selon la revendication 1, dans lequel une priorité de données des données cibles est une priorité de données cible, et
le procédé comprenant également l'étape consistant à : décider (301) de ne transmettre les données cibles sur aucune porteuse ;
dans lequel la décision de ne transmettre les données cibles sur aucune porteuse comprend l'étape consistant à :
décider de ne transmettre, sur aucune porteuse, des données correspondant à au moins un élément parmi le service cible et la priorité de données cible.

3. Procédé selon la revendication 1, dans lequel la détermination de la porteuse cible dans le premier ensemble de porteuses et la transmission des données cibles en utilisant la porteuse cible comprend l'étape consistant à :
sélectionner, par le terminal dans le premier ensemble de porteuses, une porteuse sur laquelle la valeur mesurée du CBR est la plus faible, comme porteuse cible pour la transmission des données cibles.

4. Procédé selon la revendication 1, dans lequel la détermination de la porteuse cible dans le premier ensemble de porteuses et la transmission des données cibles en utilisant la porteuse cible comprend l'étape consistant à :
sélectionner, par le terminal, n'importe quelle porteuse dans le premier ensemble de porteuses, comme porteuse cible pour la transmission des données cibles.

5. Procédé selon la revendication 1, dans lequel la détermination de la porteuse cible dans le premier ensemble de porteuses et la transmission des données cibles en utilisant la porteuse cible comprend les étapes consistant à :
déterminer, par le terminal, une méthode de sélection de la porteuse cible,
déterminer la porteuse cible selon la méthode de sélection de la porteuse cible, et
transmettre les données cibles en utilisant la porteuse cible, dans lequel
lorsque le terminal détermine une première méthode de sélection, le terminal sélectionne, dans le premier ensemble de porteuses, une porteuse sur laquelle la valeur mesurée du CBR est la plus faible, comme porteuse cible pour la transmission des données cibles ; et
lorsque le terminal détermine une deuxième méthode de sélection, le terminal sélectionne, dans le premier ensemble de porteuses, n'importe quelle porteuse comme porteuse cible pour la transmission des données cible.

6. Procédé selon la revendication 5, le procédé comprenant également l'étape consistant à :
lorsque le terminal détermine une troisième méthode de sélection, décider, par le terminal, de ne transmettre les données cibles sur aucune porteuse.

7. Procédé selon la revendication 6, dans lequel une priorité de données des données cibles est une priorité de données cible, et
dans lequel la décision, par le terminal, de ne transmettre les données cibles sur aucune porteuse comprend l'étape consistant à :
décider de ne transmettre, sur aucune porteuse, des données correspondant à au moins un élément parmi le service cible et la priorité de données cible.

8. Procédé selon l'une quelconque des revendications 1 à 7, dans lequel
le seuil est configuré pour un système ;
le seuil est configuré pour une cellule ;
le seuil est configuré pour le terminal ;
le seuil est configuré pour une porteuse ; ou
le seuil est configuré pour un pool de ressources sur une porteuse.

9. Appareil de transmission de données, l'appareil comprenant :
une unité de détermination (901), configurée pour,
lorsqu'il est déterminé qu'une valeur mesurée d'un taux d'activité de canal, CBR, d'au moins une porteuse d'un premier ensemble de porteuses est inférieure à seuil,
déterminer une porteuse cible à partir de ladite au moins une porteuse,
lorsqu'il est déterminé que la valeur mesurée du CBR de chaque porteuse du premier ensemble de porteuses est supérieure au seuil,
déterminer la porteuse cible dans le premier ensemble de porteuses, et
une unité de transmission (902), configurée pour transmettre les données cibles en utilisant la porteuse cible,
dans lequel le premier ensemble de porteuses est un ensemble de porteuses correspondant à un service cible auquel les données cibles appartiennent, et
dans lequel le premier ensemble de porteuses est également un ensemble de porteuses mis en correspondance avec une priorité de données cible des données cibles.

10. Appareil selon la revendication 9, dans lequel une priorité de données des données cibles est une priorité de données cible, et
l'unité de détermination (901) est également configurée pour décider de ne transmettre les données cibles sur aucune porteuse ;
dans lequel la décision de ne transmettre les données cibles sur aucune porteuse comprend l'étape consistant à :
décider de ne transmettre, sur aucune porteuse, des données correspondant à au moins un élément parmi le service cible et la priorité de données cible.

11. Appareil selon la revendication 9, dans lequel l'unité de détermination est configurée pour sélectionner, dans le premier ensemble de porteuses, une porteuse sur laquelle la valeur mesurée du CBR est la plus faible, comme porteuse cible.

12. Appareil selon la revendication 9, dans lequel l'unité de détermination est configurée pour sélectionner n'importe quelle porteuse dans le premier ensemble de porteuses comme porteuse cible.

13. Appareil selon la revendication 9, dans lequel l'unité de détermination est configurée pour déterminer une méthode de sélection de la porteuse cible, et déterminer la porteuse cible selon la méthode de sélection de la porteuse cible, dans lequel
lorsqu'une première méthode de sélection est déterminée, une porteuse sur laquelle la valeur mesurée du CBR est la plus faible est sélectionnée dans le premier ensemble de porteuses comme porteuse cible ; et
lorsqu'une deuxième méthode de sélection est déterminée, n'importe quelle porteuse est sélectionnée dans le premier ensemble de porteuses comme porteuse cible.

14. Appareil selon la revendication 13, dans lequel, lorsqu'une troisième méthode de sélection est déterminée, l'appareil décide de ne transmettre les données cibles sur aucune porteuse.

15. Appareil selon la revendication 14, dans lequel une priorité de données des données cibles est une priorité de données cible, et
la décision de ne transmettre les données cibles sur aucune porteuse comprend l'étape consistant à :
décider de ne transmettre, sur aucune porteuse, des données correspondant à au moins un élément parmi le service cible et la priorité de données cible.

16. Appareil selon l'une quelconque des revendications 9 à 15, dans lequel
le seuil est configuré pour un système ;
le seuil est configuré pour une cellule ;
le seuil est configuré pour le terminal ;
le seuil est configuré pour une porteuse ; ou
le seuil est configuré pour un pool de ressources sur une porteuse.
